# EUROPÄISCHE PATENTANMELDUNG

(11) **EP 1 621 758 A2**
(43) Veröffentlichungstag der Anmeldung: **01.02.2006**
(21) Anmeldenummer: 05012455.1
(22) Anmeldetag: 09.06.2005
(51) Int. Cl.: F02M 35/10, F02M 35/12

(54) **Flexibler Schlauch, vorzugsweise Ladeluftschlauch für Kraftfahrzeuge**

(30) Priorität: 30.07.2004 DE 102004037088
(71) Anmelder: VERITAS AG, 63571 Gelnhausen (DE)
(72) Erfinder: Grebe, Thomas, 63599 Biebergemünd (DE)
(74) Vertreter: Grünecker, Kinkeldey, Stockmair & Schwanhäusser Anwaltssozietät

(57) **Zusammenfassung**

Die vorliegende Erfindung bezieht sich auf einen flexiblen Schlauch, vorzugsweise Ladeluftschlauch für Kraftfahrzeuge, mit wenigstens einem gewellten Abschnitt und einem zumindest abschnittsweise innerhalb des gewellten Abschnitts angeordneten im Wesentlichen rohrförmigen Abschnitts. Um die Montage derartiger Schläuche zu vereinfachen ist erfindungsgemäß vorgesehen, dass der gewellte Abschnitt mit dem rohrförmigen Abschnitt einstückig ausgebildet und der rohrförmige Abschnitt aus einer gestreckten Stellung, in der der gewellte und der rohrförmige Abschnitt hintereinander angeordnet sind, durch Umstülpen in den gewellten Abschnitt eingebracht ist.

## Beschreibung

Die vorliegende Erfindung bezieht sich auf einen flexiblen Schlauch, vorzugsweise Ladeluftschlauch für Kraftfahrzeuge, mit wenigstens einem gewellten Abschnitt und einem zumindest abschnittsweise innerhalb des gewellten Abschnitts angeordneten, im Wesentlichen rohrförmigen Abschnitt.

Derartige Schläuche sind z.B. aus der nicht vorveröffentlichten deutschen Offenlegungsschrift 103 41 319.7 bekannt. Der dort beschriebene Schlauch besteht aus elastomerem Material und wird insbesondere bei Turbodieselbrennkraftmaschinen als sogenannter Ladeluftschlauch eingesetzt. Er dient zum Transport der Ansaugluft der Brennkraftmaschine in bekannter Weise. Er ist im Wesentlichen faltenbalgähnlich gestaltet und erreicht dadurch eine gewisse Elastizität, um in den zunehmend enger werdenden und verbauten Motorräumen verlegbar zu sein und um den Motor vom übrigen Kraftfahrzeug schalltechnisch zu entkoppeln. Aufgrund der pulsierenden Arbeitsweise einer Brennkraftmaschine werden Ladeluftschläuche zu Schwingungen angeregt. Zusätzlich werden Schwingungen durch den im Ansaugkreislauf angeordneten Turbolader auf die Ladeluftschläuche übertragen. Ladeluftschläuche werden im Einsatz hohen Belastungen ausgesetzt. Aufgrund der Schwingungen kommt es zusätzlich zu hochfrequenten Geräuschen. Da die Geräuschanforderungen an Ladeluftschläuche und Kraftfahrzeuge ganz allgemein zunehmend strenger werden, gab es Versuche bei den bekannten Ladeluftschläuchen rohrähnliche Abschnitt vorzusehen, die sich zumindest teilweise in den Wellabschnitt des Ladeluftschlauches hineinerstrecken. Dadurch können Resonanzräume zwischen dem rohrförmigen Abschnitt und dem Wellabschnitt erzeugt werden, die zu einer Herabsetzung des Geräuschpegels führen können. Die Herstellung derartiger Schläuche ist jedoch vergleichsweise aufwändig. Sie kommen daher nur bei vergleichsweise hochpreisigen Kraftfahrzeugen zum Einsatz.

Aufgabe der Erfindung ist es, einen flexiblen Schlauch der eingangs genannten Art weiterzubilden, so dass er einerseits kostengünstig und einfach herzustellen ist, andererseits jedoch ausreichende Schalldämpfungseigenschaften aufweist.

Die Aufgabe wird erfindungsgemäß gelöst durch einen flexiblen Schlauch der eingangs genannten Art, bei dem der gewellte Abschnitt mit dem rohrförmigen Abschnitt einstückig ausgebildet und der rohrförmige Abschnitt aus einer gestreckten Stellung, in der der gewellte und der rohrförmige Abschnitt hintereinander angeordnet sind, durch Umstülpen in den gewellten Abschnitt eingebracht ist.

Diese Lösung ist einfach und hat den Vorteil, dass der flexible Schlauch aus einem zusammenhängenden Stück herstellbar ist, so dass der gewellte und der rohrförmige Abschnitt gemeinsam hergestellt werden. Durch Umstülpen des rohrförmigen Abschnitts in den gewellten Abschnitt kann der flexible Schlauch vereinfacht und in kostengünstiger Weise hergestellt werden. Hierzu können vergleichsweise einfache Werkzeuge verwendet werden. Gerade bei Serienfertigungen ist dies ein entscheidender Vorteil. So können die formgebenden Maßnahmen an einem einzigen Rohling durchgeführt werden, der durch einen einfachen Zusatzschritt unmittelbar an das Herstellen des flexiblen Rohlings in seiner gestreckten Stellung erfolgen kann. Nicht wird nur die Herstellung gegenüber herkömmlichen flexiblen Schläuchen mit rohrförmigen Abschnitten wesentlich vereinfacht, sondern zudem auch gute Schalldämmungseigenschaften erreicht.

In einer vorteilhaften Weiterbildung der Erfindung kann sich der rohrförmige Abschnitt über die gesamte Länge des gewellten Abschnitts erstrecken. Auf diese Weise kann das Schwingungsverhalten des Schlauchs weiter verbessert und die Schallerzeugung weiter vermindert werden.

Zur Bildung von Resonanzräumen kann der rohrförmige Abschnitt Öffnungen aufweisen, von denen wenigstens eine innerhalb einer Wellung des gewellten Abschnitts angeordnet ist. Die durch den Schlauch geförderte Luft kann dadurch in die Resonanzräume eindringen, die zwischen rohrförmigen Abschnitt und dem gewellten Abschnitt erzeugt werden. Dabei wird Energie absorbiert und eine spürbare Geräuschminderung erzeugt.

Von Vorteil kann es dabei sein, wenn der rohrförmige Abschnitt mehrere Öffnungen aufweist, die jeweils den Wellungen zugeordnet sind. Dadurch lässt sich das Schwingungsverhalten weiter verbessern und der Geräuschpegel herabsetzen.

Darüber hinaus kann es sich auch als günstig erweisen, wenn der rohrförmige Abschnitt und der gewellte Abschnitt zumindest im Bereich der Wellungen abschnittsweise aneinander liegen. Auf diese Weise lassen sich geschlossene Resonanzräume bilden, die jeweils durch die Wellung und den rohrförmigen Abschnitt begrenzt sind. Durch die Öffnungen kann die Luft in die Resonanzräume eindringen.

Weiterhin kann es sich als vorteilhaft erweisen, wenn die Wandstärke des gewellten Abschnitts im Wesentlichen der Wandstärke des rohrförmigen Abschnitts entspricht.

Dabei kann es sich als günstig erweisen, wenn der Innendurchmesser des rohrförmigen Abschnitts im Wesentlichen dem 10- bis 15-fachen der Wandstärke des rohrförmigen Abschnitts entspricht. Bei einer solchen Wandstärke lässt sich ein guter Kompromiss zwischen Formbarkeit während des Umstülpens und gleichzeitig eine ausreichende Festigkeit erzielen, um die gewünschten schalltechnischen Eigenschaften zu erzielen.

In einer weiteren Ausführungsform kann am gewellten Abschnitt eine Stabilisierungseinrichtung vorgesehen sein. Auf diese Weise kann eine größere Steifigkeit des Schlauchs erzielt werden, um dadurch den Schallpegel zu reduzieren und die Festigkeit des Schlauchs zu erhöhen.

Von Vorteil kann es dabei sein, wenn die Stabilisierungseinrichtung mehrere voneinander beabstandete Stabilisierungselemente aufweist. Dadurch kann die Festigkeit des Schlauchs gezielt an den gewünschten Stellen erhöht werden.

Die Steifigkeit des Schlauchs lässt sich erhöhen, wenn die Stabilisierungselemente in Wellentälern des gewellten Abschnitts angeordnet sind.

Ebenso kann die Steifigkeit erhöht werden, wenn die Stabilisierungselemente jeweils den Wellungen benachbart angeordnet sind. Insbesondere können die Stabilisierungselemente dann den gewellten Abschnitt beidseitig begrenzen.

Zudem kann es sich als günstig erweisen, wenn die Stabilisierungselemente den gewellten Abschnitt ringförmig umgeben. Dadurch kann auf einfache Weise die Steifigkeit des flexiblen Schlauchs erhöht werden.

In einer vorteilhaften Weiterbildung der Erfindung kann der Schlauch abschnittsweise mehrschichtig mit zumindest einer Außenschicht aufgebaut sein. Dadurch lassen sich gezielt die Schwingungseigenschaften des Schlauchs beeinflussen. Darüber hinaus kann die Außenschicht als Schutzschicht dienen, um dadurch die Widerstandsfähigkeit des Schlauchs zu erhöhen. Grundsätzlich wäre es auch denkbar, einen Schlauch mit einer solchen Außenschicht zu versehen, bei dem kein rohrförmiger Abschnitt vorgesehen ist, oder aber der rohrförmige Abschnitt in bekannter Weise im Schlauch angebracht wird.

Als günstig kann es sich erweisen, wenn die Außenschicht im Bereich der Wellungen angebracht ist. Gerade in diesem Bereich treten die größten Belastungen für den Schlauch auf. Zudem sind diese Bereiche stoß- und beschädigungsgefährdet.

Wenn die Schichtdicke den Verlauf der Wellung folgt, wobei die Schichtdicke im Bereich des größten Außendurchmessers der Wellung am größten ist, kann insbesondere die Festigkeit im Bereich der Wellung und dort im Bereich des größten Außendurchmessers erhöht werden. Dies kann sich günstig auf das Geräuschverhalten des Schlauches auswirken. Insbesondere, wenn die Stabilisierungselemente beidseitig der Wellung vorgesehen sind, kann dies zu einem Schlauch führen, der einerseits ausreichend steif und andererseits ausreichend flexibel ist, um im Motorraum verlegt werden zu können. Auch diese Ausführungsform ist wiederum unabhängig vom Vorhandensein eines rohrförmigen Abschnitts im Inneren des Schlauches.

Besonders vorteilhafte Ergebnisse können erzielt werden, wenn die maximale Schichtdicke der Außenschicht größer als die darunter liegende Schichtdicke des Schlauchs ist. Gerade bei Schläuchen, bei denen die Wellung im Querschnitt gesehen im Wesentlichen dreieckförmig ist, ergibt sich eine Verbesserung der Festigkeit im Bereich des größten Außendurchmessers.

In einer weiteren vorteilhaften Ausgestaltung der Erfindung kann der gewellte Abschnitt mit dem rohrförmigen Abschnitt stoffschlüssig verbunden sein. Durch eine stoffschlüssige Verbindung lassen sich insbesondere die Resonanzräume zwischen den Wellungen und dem rohrförmigen Abschnitt einfach und kostengünstig erzeugen.

Weiterhin bezieht sich die Erfindung auf ein Verfahren zum Herstellen eines flexiblen Schlauchs, der einen gewellten Abschnitt und einen zumindest abschnittsweise innerhalb des gewellten Abschnitts angeordneten, im Wesentlichen rohrförmigen Abschnitt aufweist und der Schlauch von einer gestreckten Stellung ausgehend, in der der gewellte Abschnitt und der rohrförmige Abschnitt hintereinander angeordnet sind, anschließend der ringförmige Abschnitt durch Umstülpen in den gewellten Abschnitt eingebracht wird.

Auf diese Weise lässt sich schnell und einfach ein erfindungsgemäßer Wellschlauch herstellen, der die erforderlichen akustischen Eigenschaften aufweist.

Von Vorteil kann es dabei sein, wenn der Schlauch erst nach dem Umstülpen vulkanisiert wird. Vor dem Vulkanisieren ist der Schlauchrohling noch weich und kann daher leicht umgestülpt und in Form gebracht werden.

Dabei kann es sich als vorteilhaft erweisen, wenn der rohrförmige Abschnitt in den gewellten Abschnitt eingezogen wird.

Ein besonders einfaches Fertigungsverfahren ergibt sich, wenn zum Umstülpen ein Montagedorn verwendet wird.

Bei der Verwendung eines Montagedorns kann es sich als günstig erweisen, wenn der Schlauch auf den Montagedorn aufgeschoben wird, wobei das Umstülpen des Schlauchs erfolgt.

Weiterhin kann es sich als günstig erweisen, wenn die Öffnungen vor dem Umstülpen in den ringförmigen Abschnitt eingebracht werden. Auf diese Weise kann zunächst der Rohling des Schlauchs mit sämtlichen Zuschneide- oder Stanzvorgängen abgeschlossen werden und erst anschließend durch Umstülpen der Schlauch fertiggestellt werden.

Dabei kann es sich auch noch als vorteilhaft erweisen, wenn der rohrförmige Abschnitt und der gewellte Abschnitt stoffschlüssig miteinander verbunden werden.

Weiterhin bezieht sich die Erfindung noch auf einen flexiblen Schlauch mit einem gewellten Abschnitt, dadurch gekennzeichnet, dass der Schlauch wenigstens abschnittsweise mehrschichtig mit einer Außenschicht ausgebildet ist.

Durch einen solchen mehrschichtigen Aufbau können die Festigkeitseigenschaften des Schlauchs gezielt beeinflusst werden. So können insbesondere in beschädigungsgefährdeten Bereichen zusätzliche, möglicherweise besonders widerstandsfähige, Schichten vorgesehen sein.

Dabei kann es sich insbesondere als vorteilhaft erweisen, wenn die Außenschicht zumindest im gewellten Abschnitt angeordnet ist. Gerade die gewellten Abschnitte mit ihren Bereichen des größten Umfangs sind beschädigungsgefährdet.

Nachfolgend wird die Wirkungs- und Funktionsweise der Erfindung anhand eines Ausführungsbeispiels näher erläutert.

Es zeigen:
- Fig. 1: den erfindungsgemäßen flexiblen Schlauch in einer gestreckten Stellung;
- Fig. 2: den erfindungsgemäßen Schlauch mit gewelltem Abschnitt und rohrförmigem Abschnitt im montierten Zustand.

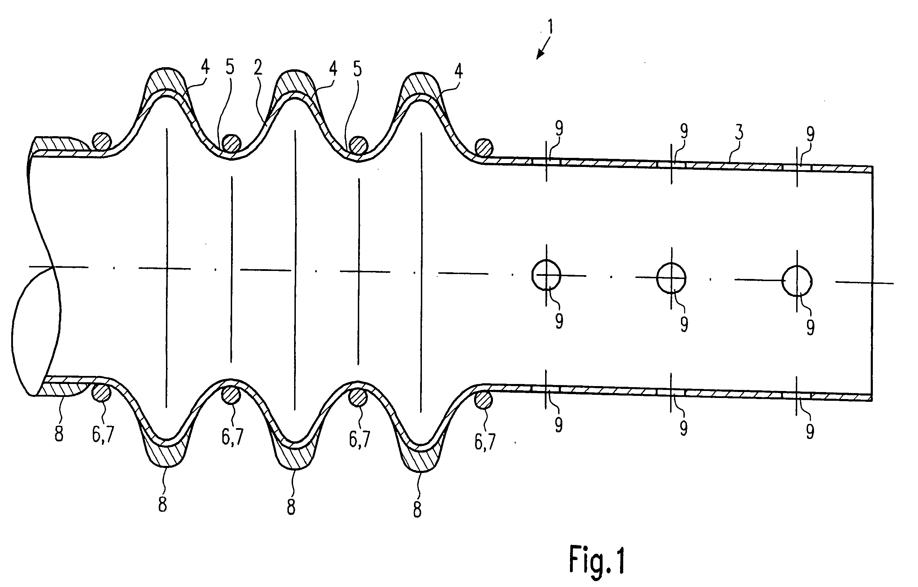

Figur 1 zeigt den erfindungsgemäßen flexiblen Schlauch 1 in einer Schnittdarstellung. Der flexible Schlauch 1 verfügt über einen gewellten Abschnitt 2 und einen rohrförmigen Abschnitt 3. In der Darstellung in Figur 1 befindet sich der flexible Schlauch in einer gestreckten Stellung, in der der gewellte Abschnitt und der rohrförmigen Abschnitt hintereinander angeordnet sind. Der gewellte und der rohrförmige Abschnitt sind einstückig miteinander verbunden.

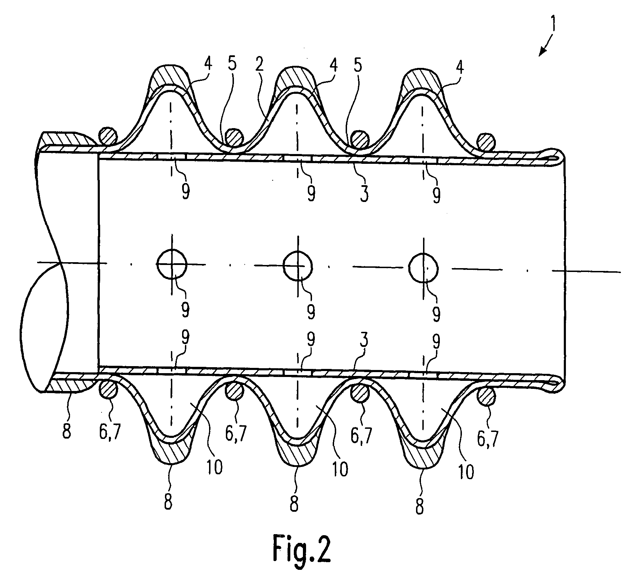

In Figur 2 ist der flexible Schlauch in einer montierten Stellung dargestellt, in der der rohrförmige Abschnitt 3 innerhalb des gewellten Abschnittes 2 angeordnet ist.

Der flexible Schlauch besteht aus einem elastomeren Material und ist dadurch ausreichend flexibel. Die Wandstärke ist über den gesamten Schlauch im Wesentlichen gleich. Der Schlauch kann einheitlich aus dem gleichen Material bestehen oder in bekannter Weise mit Verstärkungsschichten, wie Gewebeschichten versehen sein oder mehrlagig aufgebaut sein.

Der gewellte Abschnitt 2 verfügt in dem dargestellten Ausführungsbeispiel über drei Wellungen 4, die im Wesentlichen von gleicher Gestalt sind. Denkbar ist es auch, die Wellungen unterschiedlich zu gestalten. Beispielsweise kann der Außendurchmesser der Wellungen in der Darstellung in Figur 1 von links nach rechts ansteigen. Ebenso ist es denkbar, die mittlere der drei Wellungen mit dem größten Außendurchmesser zu versehen. Ferner ist es auch denkbar, die Anzahl der Wellungen zu verändern oder mehrere gewellte Abschnitte vorzusehen, die voneinander beabstandet sind. Durch die Wellungen ergeben sich Wellentäler 5. Der Innendurchmesser der Wellentäler an der engsten Stelle entspricht im Wesentlichen dem Innendurchmesser des Schlauchs in der Darstellung in Figur 1 links von dem gewellten Abschnitt.

Der flexible Schlauch verfügt darüber hinaus über eine Stabilisierungseinrichtung 6, die im vorliegenden Beispiel aus vier ringförmigen Stabilisierungselementen 7 besteht, die in den Wellentälern 5 und benachbart der beiden äußeren Wellungen angeordnet sind. Die Stabilisierungselemente umgreifen den Schlauch und liegen an ihm an. Die Stabilisierungselemente können z. B. aus Metall gefertigt sein. Denkbar sind auch andere Kunststoffe, wobei die Festigkeit der Stabilisierungselemente deutlich größer als die Festigkeit des Schlauchs ist.

Ferner weist der flexible Schlauch abschnittsweise eine Außenschicht 8 auf. Bei dieser Außenschicht kann es sich ebenfalls um ein elastomeres Material handeln. Bevorzugt ist dieses Material von größerer Festigkeit als das Material des darunter liegenden Schlauchs. Auch ist die Außenschicht 8 nur teilweise aufgetragen, nämlich in der Darstellung in Figur 1 links der Wellungen bis in die Nähe einer der Stabilisierungseinrichtungen und darüber hinaus jeweils im Bereich der Wellungen. Im Bereich der Wellungen variiert der Außendurchmesser der Außenschicht, wobei er im Bereich des größten Durchmessers der Wellung ebenfalls am größten ist. Die Außenschicht läuft zum Grund des Wellentals 5 hin aus. Denkbar ist es bei einer alternativen Ausführungsform auch, eine solche Außenschicht über die gesamte Außenfläche des flexiblen Schlauchs vorzusehen. Es hat sich jedoch gezeigt, dass bei der erfindungsgemäßen Ausführungsform die Festigkeitseigenschaften des Schlauchs gezielt beeinflusst werden können. Insbesondere wird durch das abschnittsweise Aufbringen der Außenschicht 8 am Außenumfang der Wellungen das Schwingungsverhalten positiv beeinflusst. Bei dem für die Außenschicht verwendeten Material handelt es darüber hinaus um ein gegenüber dem Material des darunter liegenden Schlauchs schwereren Material, um dadurch die Schwingungen zu beeinflussen. Außerdem ist die widerstandsfähigere Außenschicht insbesondere in den verschleißintensivsten Bereichen am größten Außendurchmesser der Wellungen am größten, um dadurch die Lebensdauer des Schlauches zu verlängern und Beschädigungen zu vermeiden.

Der rohrförmige Abschnitt 3 verläuft im Wesentlichen zylindermantelförmig und verfügt über Öffnungen 9, die über den Umfang gleichmäßig verteilt sind. Die Anordnung der Öffnungen 9 ist dabei so gewählt, dass in der Darstellung in Figur 2 die Öffnungen jeweils vor einer Wellung zu liegen kommen. Dadurch ergeben sich Resonanzräume, die durch die Wand des rohrförmigen Abschnittes und die Wellungen gebildet werden. Hierzu ist die Länge des rohrförmigen Abschnitts in solch einer Weise gewählt, dass sie sich im Wesentlichen über die gesamte Länge des gewellten Abschnittes erstreckt.

Zusätzlich kann eine stoffschlüssige Verbindung zwischen dem rohrförmigen Abschnitt und den Wellungen im Bereich des Wellentals erfolgen. Ebenso ist Ultraschallschweißen oder dergleichen denkbar.

Im vorliegenden Ausführungsbeispiel ist der Schlauch in der Darstellung in Figur 1 im gestreckten Zustand im Wesentlichen gerade ausgebildet. Denkbar sind jedoch auch Ausführungsformen, bei denen sowohl der gewellte Abschnitt, wie auch der rohrförmige Abschnitt entlang einer Kurve verlaufen. Ebenso ist denkbar, dass sich der rohrförmige Abschnitt nur über einen Teil des gewellten Abschnitts erstreckt. Bevorzugt ist jedoch vorgesehen, dass sich der rohrförmige Abschnitt über den gesamten gewellten Abschnitt erstreckt.

Nachfolgend wird die Wirkungs- und Funktionsweise der Erfindung näher erläutert:

Zum Herstellen des Schlauchs wird dieser in bekannter Weise zunächst als Rohling in gestreckter Form hergestellt. Anschließend wird der rohrförmige Abschnitt nach innen umgestülpt, so dass der Schlauch die in Figur 2 dargestellte Konfiguration einnimmt. Hierzu kann ein Werkzeug in Form eines Dorns vorgesehen sein. Ein solches Umstülpen eignet sich sowohl für die maschinelle Fertigung, wie auch für die manuelle Fertigung.

Durch die erfindungsgemäße Vorgehensweise ist es möglich, sämtliche fertigungstechnisch aufwändigen Prozesse in einem Arbeitsgang durchzuführen. So werden die Öffnungen bereits in den rohrförmigen Abschnitt eingebracht. Da die Montage des Schlauchs durch Umstülpen erfolgt, ist es nicht mehr erforderlich zwei unterschiedliche Bauteile herzustellen und nachträglich miteinander zu verbinden. Durch das Umstülpen erhält man eine einfache und genaue Lagefixierung des rohrförmigen Abschnitts innerhalb des gewellten Abschnitts.

Aufgrund der Gestaltung des rohrförmigen Abschnitts mit den Öffnungen entstehen zwischen dem rohrförmigen Abschnitt und den Wellungen Resonanzräume 10, mit denen sich das akustische Verhalten des Schlauchs optimieren lässt. Eine weitere Verbesserung des akustischen Verhaltens, wie auch der Verschleißflüssigkeit des Schlauches, kann durch das abschnittsweise Aufbringen der schützenden Außenschicht nachträglich erfolgen. Eine zusätzliche Stabilisierung und schwingungstechnische Verbesserung kann durch die Stabilisierungseinrichtung erreicht werden.

## Patentansprüche

1. Flexibler Schlauch, vorzugsweise Ladeluftschlauch für Kraftfahrzeuge, mit wenigstens einem gewellten Abschnitt (2) und einem zumindest abschnittsweise innerhalb des gewellten Abschnitts angeordneten im Wesentlichen rohrförmigen Abschnitt (3), **dadurch gekennzeichnet, dass** der gewellte Abschnitt (2) mit dem rohrförmigen Abschnitt (3) einstückig ausgebildet und der rohrförmige Abschnitt aus einer gestreckten Stellung, in der der gewellte und der rohrförmige Abschnitt hintereinander angeordnet sind, durch Umstülpen in den gewellten Abschnitt eingebracht ist.

2. Flexibler Schlauch nach Anspruch 1, **dadurch gekennzeichnet, dass** der rohrförmige Abschnitt sich über die gesamte Länge des gewellten Abschnitts erstreckt.

3. Flexibler Schlauch nach Anspruch 1 oder 2, **dadurch gekennzeichnet, dass** der rohrförmige Abschnitt (3) Öffnungen (9) aufweist, von denen wenigstens eine innerhalb einer Wellung (4) des gewellten Abschnitts angeordnet ist.

4. Flexibler Schlauch nach einem der vorangegangenen Ansprüche, **dadurch gekennzeichnet, dass** der rohrförmige Abschnitt mehrere Öffnungen aufweist, die jeweils einer der Wellungen zugeordnet sind.

5. Flexibler Schlauch nach einem der vorangegangenen Ansprüche, **dadurch gekennzeichnet, dass** der rohrförmige Abschnitt und der gewellte Abschnitt zumindest im Bereich der Wellen abschnittsweise aneinander liegen.

6. Flexibler Schlauch nach einem der vorangegangenen Ansprüche, **dadurch gekennzeichnet, dass** die Wandstärke des gewellten Abschnitts im Wesentlichen der Wandstärke des rohrförmigen Abschnitts entspricht.

7. Flexibler Schlauch nach einem der vorangegangenen Ansprüche, **dadurch gekennzeichnet, dass** der Innendurchmesser des rohrförmigen Abschnitts im Wesentlichen dem 10- bis 15-fachen der Wandstärke des rohrförmigen Abschnitts entspricht.

8. Flexibler Schlauch nach einem der vorangegangenen Ansprüche, **dadurch gekennzeichnet, dass** eine Stabilisierungseinrichtung vorgesehen ist.

9. Flexibler Schlauch nach einem der vorangegangenen Ansprüche, **dadurch gekennzeichnet, dass** die Stabilisierungseinrichtung mehrere voneinander beabstandete Stabilisierungselemente aufweist.

10. Flexibler Schlauch nach einem der vorangegangenen Ansprüche, **dadurch gekennzeichnet, dass** die Stabilisierungselemente jeweils den Wellungen benachbart angeordnet sind.

11. Flexibler Schlauch nach einem der vorangegangenen Ansprüche, **dadurch gekennzeichnet, dass** die Stabilisierungselemente in den Wellentälern der Wellungen angeordnet sind.

12. Flexibler Schlauch nach einem der vorangegangenen Ansprüche, **dadurch gekennzeichnet, dass** die Stabilisierungselemente die gewellten Abschnitte ringförmig umgeben.

13. Flexibler Schlauch nach einem der vorangegangenen Ansprüche, **dadurch gekennzeichnet, dass** der Schlauch abschnittsweise mehrschichtig mit zumindest einer Außenschicht aufgebaut ist.

14. Flexibler Schlauch nach einem der vorangegangenen Ansprüche, **dadurch gekennzeichnet, dass** die Außenschicht im Bereich der Wellungen angeordnet ist.

15. Flexibler Schlauch nach einem der vorangegangenen Ansprüche, **dadurch gekennzeichnet, dass** die Schichtstärke der Außenschicht variiert.

16. Flexibler Schlauch nach einem der vorangegangenen Ansprüche, **dadurch gekennzeichnet, dass** die Schichtdicke dem Verlauf der Wellungen folgt, wobei die Schichtdicke im Bereich des größten Außendurchmessers der Wellung am größten ist.

17. Flexibler Schlauch nach einem der vorangegangenen Ansprüche, **dadurch gekennzeichnet, dass** die maximale Schichtdicke der Außenschicht größer als die darunter liegende Schichtdicke des Schlauchs ist.

18. Flexibler Schlauch nach einem der vorangegangenen Ansprüche, **dadurch gekennzeichnet, dass** der gewellte Abschnitt und der rohrförmige Abschnitt stoffschlüssig miteinander verbunden sind.

19. Verfahren zum Herstellen eines flexiblen Schlauchs, der einen gewellten Abschnitt (2) und einen zumindest abschnittsweise innerhalb des gewellten Abschnitts angeordneten, im Wesentlichen rohrförmigen Abschnitt (3) aufweist, und der Schlauch von einer gestreckten Stellung ausgehend, in der der gewellte Abschnitt und der rohrförmige Abschnitt hintereinander angeordnet sind, der rohrförmige Abschnitt durch Umstülpen in den gewellten Abschnitt eingebracht wird.

20. Flexibler Schlauch nach Anspruch 19, **dadurch gekennzeichnet, dass** der Schlauch erst nach dem Umstülpen vulkanisiert wird.

21. Flexibler Schlauch nach Anspruch 19 oder 20, **dadurch gekennzeichnet, dass** der rohrförmige Abschnitt in den gewellten Abschnitt eingezogen wird.

22. Verfahren nach einem der Ansprüche 19 bis 21, **dadurch gekennzeichnet, dass** zum Umstülpen ein Montagedorn verwendet wird.

23. Verfahren nach einem der Ansprüche 19 bis 22, **dadurch gekennzeichnet, dass** der Schlauch mit dem rohrförmigen Abschnitt auf den Montagedorn aufgeschoben wird.

24. Verfahren nach einem der Ansprüche 19 bis 23, **dadurch gekennzeichnet, dass** der rohrförmige Abschnitt und der gewellte Abschnitt stoffschlüssig miteinander verbunden werden.

25. Verfahren nach einem der Ansprüche 19 bis 24, **dadurch gekennzeichnet, dass** die Öffnungen vor dem Umstülpen in den rohrförmigen Abschnitt eingebracht werden.

26. Flexibler Schlauch mit einem gewellten Abschnitt, **dadurch gekennzeichnet, dass** der Schlauch wenigstens abschnittweise mehrschichtig mit einer Außenschicht ausgebildet ist.

27. Flexibler Schlauch nach Anspruch 26, **dadurch gekennzeichnet, dass** die Außenschicht im gewellten Abschnitt angeordnet ist.

28. Flexibler Schlauch nach Anspruch 26 oder 27, **dadurch gekennzeichnet, dass** die Außenschicht im Bereich der Wellungen vorgesehen ist und die einzelnen Abschnitte der Außenschicht voneinander beabstandet sind.
